# EUROPEAN PATENT SPECIFICATION

(11) **EP 1 122 405 B1**
(45) Date of publication and mention of the grant of the patent: **08.12.2010**
(21) Application number: 00308612.1
(22) Date of filing: 29.09.2000
(51) Int. Cl.: F01D 5/18

(54) **Gas turbine bucket cooling circuit**
Kühlkreislauf für Gastubinenschaufeln
Circuit de refroidissement pour aubes de turbines à gaz

(30) Priority: 02.02.2000 US 496715
(43) Date of publication of application: 08.08.2001
(73) Proprietor: GENERAL ELECTRIC COMPANY, Schenectady, NY 12345 (US)
(72) Inventor: Lewis, Doyle C., Greer, South Carolina 29651 (US); Barb, Kevin Joesph, Halfmoon, New York 12065 (US)
(74) Representative: Illingworth-Law, William Illingworth

(56) References cited:
- EP-A- 0 940 561
- EP-A- 0 955 449
- GB-A- 754 217
- GB-A- 2 082 257
- US-A- 3 844 679
- US-A- 5 340 278
- US-A- 5 915 923
- US-A- 5 993 155
- PATENT ABSTRACTS OF JAPAN vol. 1998, no. 02, 30 January 1998 (1998-01-30) -& JP 09 280002 A (MITSUBISHI HEAVY IND LTD), 28 October 1997 (1997-10-28)

## Description

This invention relates to a closed loop, convection cooled gas turbine bucket and to a method for cooling the platform and airfoil fillet region of the bucket.

The technology of gas turbine bucket design is continually improving. Current state-of-the-art designs employ advanced closed loop cooling systems, higher firing temperatures and new materials to achieve higher thermal efficiency. Coincident with these advances, there is an ever increasing need to design components to avoid crack initiation and subsequent coolant loss due to low cycle fatigue.

Low cycle fatigue (LCF) is a failure mechanism common to all gas turbine buckets. It is defined as damage incurred by the cyclic reversed plastic flow of metal in a component exposed to fewer than 10,000 load cycles. Low cycle fatigue stress is a function of both the stress within the section as well as the temperature. The stress may come from mechanical loads such as pressure, gas bending, or centrifugal force, or the stress may be thermally induced, created by the difference in metal temperatures between various regions and the geometric constraints between these regions. Minimizing thermal gradients within a structure is key to reducing LCF damage.

In advanced gas turbine cooled bucket designs, particularly those with thermal barrier coatings, the airfoil bulk temperature tends to run cooler than the platform at the base of the airfoil, creating a thermal stress in the platform and airfoil fillet region on the pressure side of the airfoil (where the airfoil portion joins the platform). Adequate cooling of this region is necessary to reduce the stress and to improve the low cycle fatigue life.

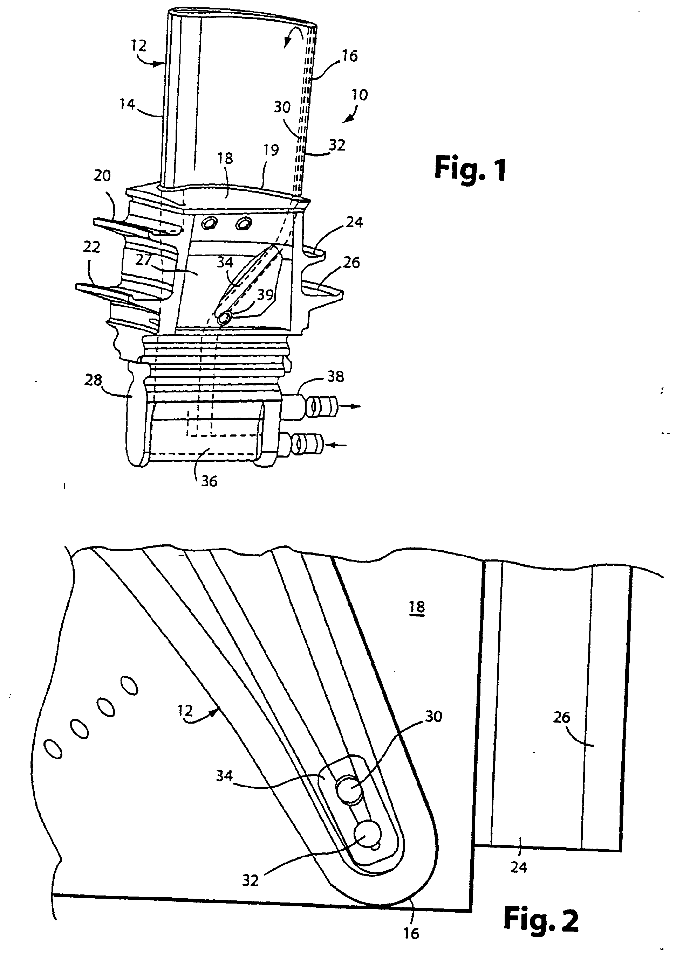

During the production of the present bucket casting, the crossover core that generates the hollow cavity through which coolant is delivered to the machined trailing edge holes is locked into the shell system at the root of the bucket. The crossover core is also held by the shell at two mid-span locations (reference crossover core supports denoted in Figure 1), and again at another location near the top of the crossover core.

It is critical to control the location of the top of the core since it is this location that forms a "target" for drilling the trailing edge cooling holes in the airfoil portion of the bucket. These machined trailing edge cooling holes must intersect the top of this core in order for coolant to flow through these holes and provide cooling to the airfoil trailing edge. One of the root causes of poor position control is inherent in the design. Specifically, since there is a difference in thermal expansion between the ceramic shell and ceramic core used in the casting process, and due to the relatively long length of the crossover core (approximately 12 inches/0.3m) the crossover core is "pulled" by its root end where it is locked in the shell. Attempts to lock this design at the tip have failed due to the fragility of the core. -

US-A-5 915 923 discloses a steam cooling arrangement for a gas turbine moving blade. The moving blade has an airfoil portion with a leading edge and a trailing edge. The arrangement comprises a steam cooling supply passage adapted to supply cooling steam to the airfoil portion of the moving blade. A steam supply passage is connected to a pocket provided in a blade root portion on the pressure side of the moving blade.

JP-A-09 280 002 discloses a platform part and a blade profile part. The blade profile port is cooled by steam and the platform part is cooled by air.

GB-A-2 082 257 discloses a cooling system to distribute liquid coolant to air foil coolant channels formed in a bucket of a turbine.

GB-A-754 217 discloses a turbine blade with an aerofoil portion in which spanwise cooling passages are connected with duct means in a blade root for supplying cooling fluid to the passages.

US-A-3 844 679 discloses individually fed convoluted cooling channels for open-circuit liquid cooled turbine buckets. Each convoluted channel is fed with liquid coolant directly from a gutter on the rotor rim via a coolant supply conduit.

EP-A-0 955 449 discloses a cooling system for a gas turbine blade.

US-A-5 993 155 discloses a gas turbine blade with cooling passages.

EP-A-0 940 561 discloses a gas turbine moving blade platform with a cooling structure.

This invention seeks to improve the low cycle fatigue capability of turbine buckets through use of an improved cooling system that is also more producible and cost effective.

Aspects of the present invention are defined in the accompanying claims.

According to a first embodiment of the invention, there is provided a closed circuit steam cooling for a gas turbine bucket having an airfoil portion joined to a platform along a fillet region comprising a steam cooling supply passage adapted to supply cooling steam to the airfoil portion of the bucket and a crossover passage adjacent and substantially parallel to said platform.

The airfoil portion includes a trailing edge cooling hole extending radially along the trailing edge and communicating with the crossover passage.

The trailing edge cooling hole intersects a portion of the crossover passage at a substantially 90° angle.

The crossover passage may include one or more turbulators.

Means may be provided for metering coolant flow into the crossover passage.

The crossover passage follows a contour of a pressure side of the said airfoil portion along a fillet region.

The crossover passage may have a radial leg and a horizontal leg.

According to a second embodiment of the invention, there is provided a turbine bucket comprising an airfoil portion having leading and trailing edges; a radially extending cooling passage within the airfoil portion, the airfoil portion being joined to a platform at a radially inner end of the airfoil portion; a dovetail mounting portion enclosing a cooling medium supply passage; and, a crossover passage in fluid communication with the cooling medium supply passage and with the radially extending cooling passage, the crossover passage having a portion extending along and substantially parallel to an underside surface of said platform.

The crossover passage may include one or more turbulators.

Means may be provided for metering coolant flow into the crossover passage.

The crossover passage follows a contour of a pressure side of the airfoil portion along a fillet region.

According to a third embodiment of the invention, there is provided a method of cooling a turbine bucket platform in a turbine bucket having an internal cooling circuit that includes a radially extending cooling passage, the method comprising:
a) providing a coolant supply passage in a dovetail mounting portion of the bucket;
b) providing a crossover passage connecting the coolant supply passage and the radially extending cooling passage; and
c) arranging the crossover passage to extend along and substantially parallel to an underside of the platform in an area to be cooled.

The crossover passage follows a contour of a pressure side of the airfoil portion along a fillet region.

Thus, in terms of design, the crossover passage is opened to the cooling passage in the shank portion of the bucket at a location close to the underside of the platform, and then runs along the underside of the platform towards the trailing edge of the airfoil. This arrangement cools both the platform and the airfoil fillet region.

This design change means that the total height of the core used in the manufacture of the bucket can be shortened to reduce the amount of thermal mismatch. The redesigned crossover core can be locked in the shell at the forward or radially outercore end, thus eliminating the prior core end location problem. Since the crossover core will bump against the main body core, there is also no concern with respect to relative radial movement of the two cores. The crossover core will be allowed to float at the aft or radially inner core location. Since the core will be completely encapsulated by shell, however, and in close proximity to the platform, it is anticipated that relative movement between the core and the platform will be reduced, and thus dimensional control improved. A further benefit of this design will be lighter weight, chiefly due to the reduced size of the central rib in the shank portion of the bucket.

The design concept may also be implemented as a post cast fabrication rather than cast. In any event, the manufacturing process employed to produce the new bucket platform cooling circuit is not regarded as part of the invention per se.

The internal heat transfer coefficients of the new crossover passage design may be optimized either through tuning the cross sectional area or wetted perimeter, thus controlling flow velocity and heat transfer coefficient. Further, the passage may be locally turbulated to increase the local heat transfer coefficients without unnecessarily increasing pressure loss and heat pickup throughout the passage.

Alternative designs permit the cooling of virtually any region of the platform by simply re-routing the crossover passage along the underside of the platform. It is also contemplated that cooling steam be metered into the trailing edge holes by the cooling holes themselves. In applications where there are no trailing edge holes to meter the cooling flow, the amount of flow that would bypass the main cooling circuit would be too great given the size limitations that would be placed on the minimum cross sectional area of the crossover passage in order to achieve adequate core producibility. Accordingly, for such applications, a separate means for metering the flow into the trailing edge holes is provided.

In its broader aspects, therefore, the present invention relates to a closed circuit steam cooling arrangement according to claim 1.

In another aspect, the invention relates to a turbine bucket comprising an airfoil portion having leading and trailing edges; at least one radially extending cooling passage within the airfoil portion, the airfoil portion joined to a platform at a radially inner end of the airfoil portion; a dovetail mounting portion enclosing a cooling medium supply passage; and a closed circuit steam cooling arrangement according to claims 1 or 2.

The invention will now be described in greater detail, by way of example, with reference to the drawings, in which:-
Figure 1 is a partially cut away perspective view of a prior gas turbine bucket;
Figure 2 is a partial plan view of the bucket shown in Figure 1;
Figure 3 is a partial side elevation of a gas turbine bucket in accordance with this invention, illustrating part of an internal cooling circuit;
Figure 4 is a plan view of a gas turbine bucket in accordance with the invention, with the airfoil tip cap removed;
Figure 5 is a partial section of the gas turbine bucket shown in Figure 4, taken at a location in radial proximity to the bucket platform;
Figure 6 is a cross section of the gas turbine bucket shown in Figure 4, taken along the line 6-6; and
Figure 7 is an enlarged detail taken from Figure 6, but with a modified metering plug.

Figure 1 illustrates a prior bucket trailing edge cooling circuit, which is part of a closed loop, serpentine circuit extending radially within the bucket. Only part of the bucket cooling circuit is shown. The bucket 10 includes an airfoil 12 having a leading edge 14 and a trailing edge 16. The airfoil is joined to a horizontal platform 18 along an airfoil fillet 19. So called "angel wings" 20, 22 and 24, 26 extend laterally away from the respective front and rear sides of the shank portion 27 of the bucket, and a dovetail portion 28 is employed to mount the bucket on a turbine wheel (not shown) in a conventional manner.

Trailing edge cooling holes 30, 32 (see also Figure 2) extend internally along and adjacent the trailing edge 16 of the airfoil, while an internal crossover passage 34 extends from the lower end of holes 30, 32 to a coolant supply passage 36 in the dovetail portion of the bucket. Cooling steam (or other medium) will flow via passages 36 and 34 into the trailing edge cooling holes 30, 32. The cooling steam reverses direction (indicated by a flow arrow at the tip of the airfoil) and travels radially inwardly via a passage (not shown) flowing eventually into the cooling steam return passage 38.

It is apparent from Figure 2 that it is critical to control the location of the top of the core that forms the passage 34 during manufacture, since the trailing edge cooling holes 30, 32. Note also the relatively large distance between the top of the passage 34 and the location of a core support plug 39, a fact which makes accurate location of the top of the crossover core problematic.

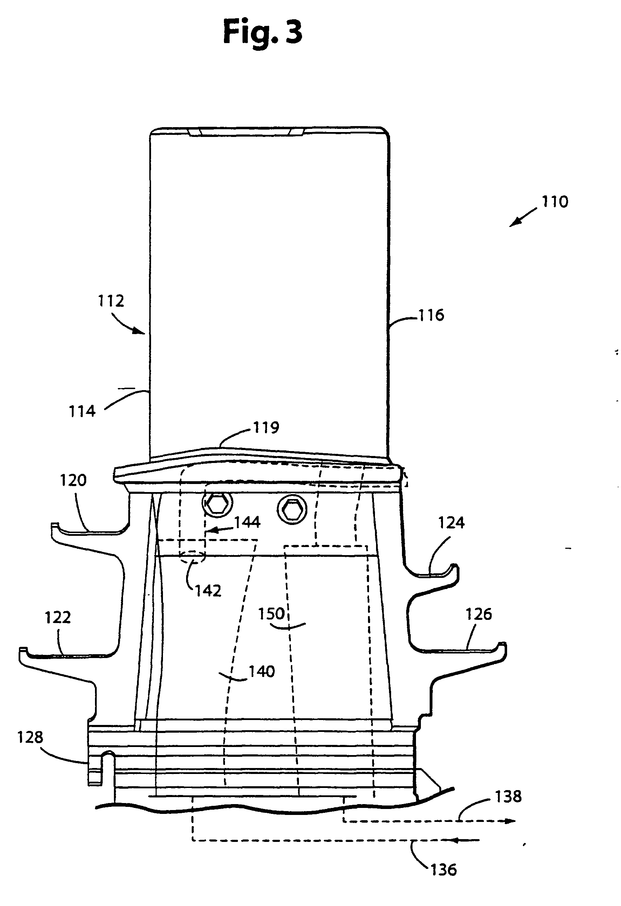

Turning now to Figures 3-8, the manner in which the present invention alleviates these problems will now be discussed in detail.

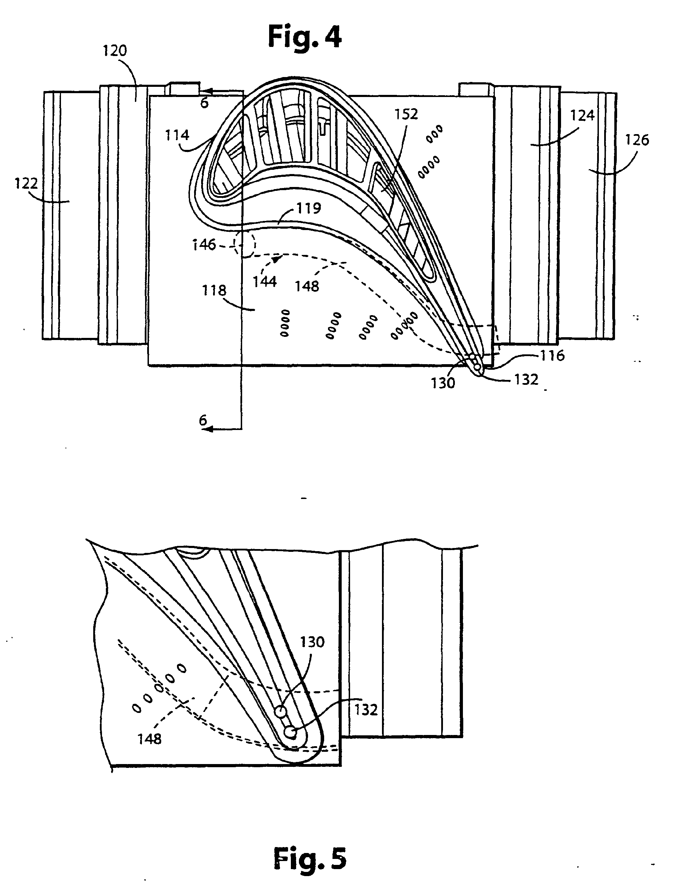

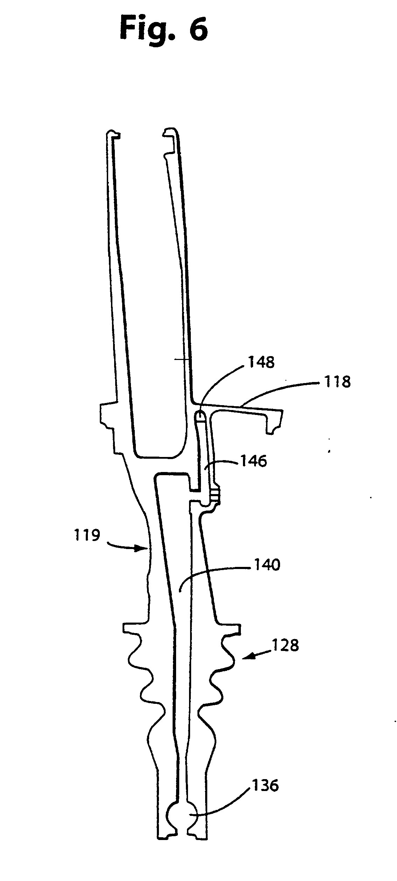

In Figures 3 and 4, similar reference numerals are employed to indicate components corresponding to those in Figures 1 and 2, but with the prefix "1" added. Thus, the bucket 110 includes an airfoil 112 having a leading edge 114 and a trailing edge 116. The airfoil joins the platform 118 along an airfoil fillet 119. The bucket 110 also has angel wings 120, 122 and 124, 126 as well as dovetail portion 128. Radially extending trailing edge cooling passages, in the form of drilled holes 130, 132 extend internally along and adjacent the trailing edge 116. In this construction, however, the cooling supply passage 136 (see Fig. 6) supplies cooling steam to an enlarged interior chamber 140 which extends radially outwardly to a location generally adjacent the angel wing 120. A new crossover inlet 142 extends horizontally between the chamber 140 and a new crossover cooling passage 144 which has a radial (or vertical, as viewed in Figures 3 and 6) leg 146 and a horizontal leg 148 which extends along the underside of the platform 118 from the forward or leading side of the bucket to the rearward or trailing side of the bucket (as best seen in Figures 5) where the passage intersects the trailing edge cooling holes 130, 132. The cooling steam flows radially outwardly along the trailing edge and then reverses direction, flowing radially inwardly, dumping into chamber 150 which, in turn, connects to the cooling return passage 138. Note that some of the radial passages for the internal bucket cooling circuit are shown in Figure 4, one such passage indicated at 152. In Figure 5, it can be seen how the new core will provide a better target for the drilled trailing edge cooling holes 130, 132.

In Figures 3-6, it is apparent how the crossover passage 144 follows the contour of the pressure side of the airfoil, along the fillet 119, thereby providing needed cooling along the underside of the platform 118 as well as along fillet 119. It is also readily apparent from Figure 2 that the height of the crossover passage is considerably reduced as compared to the prior arrangement.

Figure 6 also illustrates the manner in which the airfoil is drilled through the main body so as to connect the passage 146 with the inlet 142 leading to the interior chamber 140. The hole is then plugged at 154.

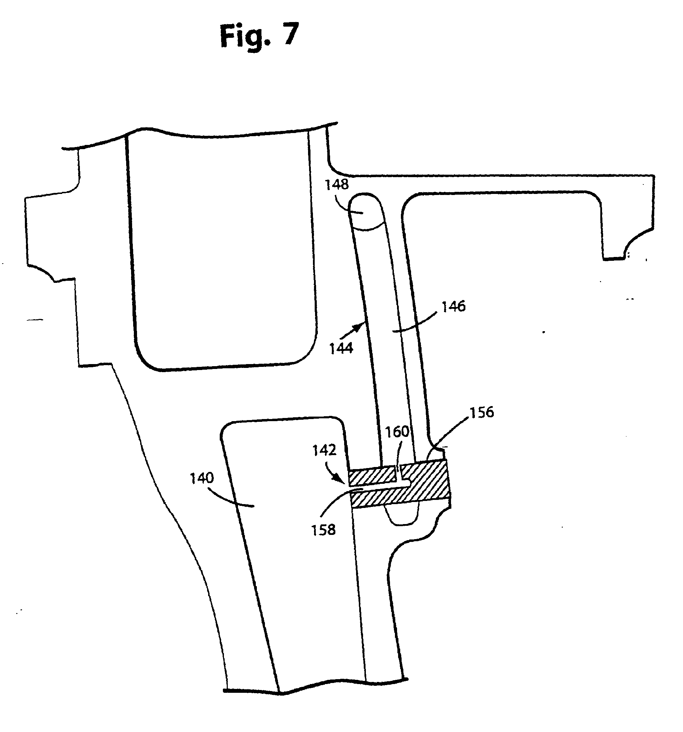

Figure 7 illustrates an alternative arrangement where a plug 156 is inserted into the drilled hole providing the communication between chamber 140 and passage 146 via inlet 142. Here, the plug 156 is formed with metering holes 158 and 160 which meter air from the chamber 140 into the passage 146. This arrangement is particularly suitable where there are no trailing edge holes to meter the flow as, for example, in second stage buckets where the cooling flow is toward the leading edge of the bucket, and then in a radially extending passage in the airfoil portion of the bucket. It will be understood that the manner in which the crossover passage is formed and the manner in which access is provided to form interior passages for metering is dependent upon the manufacturing process used to produce the bucket. Where no separate metering mechanism is provided, the trailing edge holes 130, 132 are sized to meter the cooling air.

## Claims

1. A closed circuit steam cooling arrangement for a gas turbine bucket having an airfoil portion (112) with a leading edge (114) and a trailing edge (116) joined to a platform (118) along a fillet region (119), the arrangement comprising a steam cooling supply passage (136) adapted to supply cooling steam to the airfoil portion (112) of the bucket and a crossover passage (144) adjacent and substantially parallel to an underside of said platform (118) to cool the platform (118) and the fillet (119) along a pressure side of the bucket (110), wherein the crossover passage (144) follows the contour of the pressure side of the airfoil portion (112) along the fillet region (119), crosses under the airfoil trailing edge (116) from the pressure side to the suction side and is intersected by a trailing edge cooling hole (130, 132) at a substantially 90° angle.

2. The arrangement of claim 1, wherein said crossover passage (144) includes one or more turbulators.

3. A turbine bucket (110) including a closed circuit steam cooling arrangement according to claim 1 or claim 2, the turbine bucket comprising an airfoil portion (112) having leading and trailing edges (114, 116); at least one radially extending cooling passage (130) within the airfoil portion (112), the airfoil portion (112) being joined to a platform (118) at a radially inner end of the airfoil portion (112); a dovetail mounting portion (128) enclosing the cooling medium supply passage (136); and, the crossover passage (144) being in fluid communication with said cooling medium supply passage (136) and with a radially extending cooling passage (130), said crossover passage (144) having a portion (148) extending along and substantially parallel to an underside surface of said platform (118).

4. The bucket of claim 3, including means (156, 158, 160) for metering coolant flow into said crossover passage (144).

5. A method of cooling a turbine bucket platform (118) in a turbine bucket (110) having an internal cooling circuit that includes at least one radially extending cooling passage (130), the method comprising:
a) providing a coolant supply passage (136) in a dovetail mounting portion of the bucket (110);
b) providing a crossover passage (144) connecting said coolant supply passage (136) and said at least one radially extending cooling passage (130); and
c) arranging said crossover passage (144) to extend along and substantially parallel to an underside of said platform (118) to cool the platform (118) and the fillet region (119) along a pressure side of said airfoil portion (112) wherein the crossover passage (144) follows the contour of the pressure side of the airfoil portion (112) along the fillet region (119), crosses under the airfoil trailing edge (116) from the pressure side to the suction side and is intersected by a trailing edge cooling hole (130, 132) at a substantially 90° angle.

## Patentansprüche

1. Im geschlossenen Kreislauf arbeitende Dampfkühlungsanordnung für eine Gasturbinenschaufel mit einem Schaufelblattabschnitt (112) mit einer Vorderkante (114) und einer Hinterkante (116), die mit einer Plattform (118) entlang eines Übergangsbereichs (119) verbunden sind, wobei die Anordnung einen Dampfkühlungszuführungskanal (136), der dafür eingerichtet ist, dem Schaufelblattabschnitt (112) der Schaufel Kühldampf zuzuführen, und einen an eine Unterseite der Plattform (118) angrenzenden und im Wesentlichen dazu parallelen Querkanal (144) aufweist, um die Plattform (118) und den Übergang (119) entlang einer Druckseite der Schaufel (110) zu kühlen, wobei der Querkanal (144) der Kontur der Druckseite des Schaufelblattabschnittes (112) entlang des Übergangsbereichs (119) folgt, unter der Hinterkante (116) des Schaufelblattes von der Druckseite zu der Saugseite wechselt und von einem Hinterkantenkühlloch (130, 132) im Wesentlichen in einem Winkel von 90° geschnitten wird.

2. Anordnung nach Anspruch 1, wobei der Querkanal (144) ein oder mehrere Verwirbelungselemente enthält.

3. Turbinenschaufel (110) mit einer im geschlossenen Kreislauf arbeitenden Dampfkühlungsanordnung nach Anspruch 1 oder Anspruch 2, wobei die Turbinenschaufel einen Schaufelblattabschnitt (112) mit Vorder- und Hinterkanten (114, 116); wenigstens einen sich radial erstreckenden Kühlkanal (130) in dem Schaufelblattabschnitt (112), wobei der Schaufelblattabschnitt (112) mit einer Plattform (118) an einem radial inneren Ende des Schaufelblattabschnittes (112) verbunden ist; einen Schwalbenschwanzbefestigungsabschnitt (128), der den Kühlmediumzuführungskanal (136) einschließt; und den Querkanal (144) aufweist, der mit dem Kühlmediumzuführungskanal (136) und mit einem sich radial erstreckenden Kühlkanal (130) in Fluidverbindung steht, wobei der Querkanal (144) einen Abschnitt (148) besitzt, der sich entlang und im Wesentlichen parallel zu einer Unterseitenoberfläche der Plattform (118) erstreckt.

4. Schaufel nach Anspruch 3, die eine Einrichtung (156, 158, 160) zum Dosieren des Kühlmittelflusses in den Querkanal (144) enthält.

5. Verfahren zum Kühlen einer Turbinenschaufelplattform (118) in einer Turbinenschaufel (110) mit einem internen Kühlkreislauf, der wenigstens einen sich radial erstreckenden Kühlkanal (130) enthält, wobei das Verfahren die Schritte aufweist:
a) Bereitstellen eines Kühlmittelzuführungskanals (136) in einem Schwalbenschwanzbefestigungsabschnitt der Schaufel (110);
b) Bereitstellen eines Querkanals (144), der den Kühlmittelzuführungskanal (136) und den wenigstens einen sich radial erstreckenden Kühlkanal (130) verbindet; und
c) Anordnen des Querkanals (144) so, dass er sich entlang und im Wesentlichen parallel zu einer Unterseite der Plattform (118) erstreckt, um die Plattform (118) und den Übergangsbereich (119) entlang einer Druckseite des Schaufelblattabschnittes (112) zu kühlen, wobei der Querkanal (144) der Kontur der Druckseite des Schaufelblattabschnittes (112) entlang dem Übergangsbereich (119) folgt, unter der Schaufelblatthinterkante (116) von der Druckseite auf die Saugseite wechselt und von einem Hinterkantenkühlloch (130, 132) im Wesentlichen in einem Winkel von 90° geschnitten wird.

## Revendications

1. Système de refroidissement par vapeur en circuit fermé pour une aube de turbine à gaz ayant une pale profilée (112) à bord d'attaque (112) et bord de fuite (116) réunie à une plate-forme (118) le long d'une zone formant congé de raccordement (119), le système comprenant un passage d'alimentation (136) en vapeur de refroidissement conçu pour fournir de la vapeur de refroidissement à la pale profilée (112) de l'aube et un passage de jonction (144) adjacent et sensiblement parallèle à une face inférieure de ladite plate-forme (118) afin de refroidir la plate-forme (118) et le congé de raccordement (119) sur un côté pression de l'aube (110), le passage de jonction (114) épousant le contour du côté pression de la partie formant pale profilée (112) le long de la partie formant congé de raccordement (110), croisant sous le bord de fuite (116) de la pale depuis le côté pression jusqu'au côté aspiration et étant croisé par un trou de refroidissement (130, 132) de bord de fuite suivant un angle de sensiblement 90°.

2. Système selon la revendication 1, dans lequel ledit passage de jonction (144) comporte un ou plusieurs générateurs de tourbillons.

3. Aube (110) de turbine comprenant un système de refroidissement par vapeur en circuit fermé selon la revendication 1 ou la revendication 2, l'aube de turbine comportant une partie formant pale profilée (112) ayant des bords d'attaque et de fuite (114, 116) ; au moins un passage radial de refroidissement (1230) dans la partie formant pale profilée (112), la partie formant pale profilée (112) étant réunie à une plate-forme (118) au niveau d'une extrémité radialement interne de la partie formant pale profilée (112) ; une partie de montage à queue d'aronde (128à) renfermant le passage d'alimentation (136) en agent de refroidissement ; et le passage de jonction(144) étant en communication fluidique avec ledit passage d'alimentation (136) en agent de refroidissement et avec un passage radial de refroidissement (130), ledit passage de jonction (144) ayant une partie (148) qui s'étend le long de et sensiblement parallèlement à une surface de la face inférieure de ladite plate-forme (118).

4. Aube selon la revendication 3, comprenant des moyens (156, 158, 160) pour doser le flux d'agent de refroidissement entrant dans ledit passage de jonction (144).

5. Procédé de refroidissement d'une plate-forme (118) d'aube de turbine dans une aube (110) de turbine ayant un circuit de refroidissement interne qui comporte au moins un passage radial de refroidissement (130), le procédé comprenant :
a) l'aménagement d'un passage d'alimentation (136) en agent de refroidissement dans une partie de montage à queue d'aronde de l'aube (110) ;
b) l'aménagement d'un passage de jonction (144) reliant ledit passage d'alimentation (136) en agent de refroidissement et ledit au moins un passage radial de refroidissement (130) ; et
c) organiser ledit passage de jonction (144) de manière à ce qu'il s'étende le long de et sensiblement parallèlement à une face inférieure de ladite plate-forme (118) afin de refroidir la plate-forme (118) et la zone formant congé de raccordement (119) sur un côté pression de ladite partie formant pale profilée (112), le passage épousant le contour du côté pression de la partie formant pale profilée (112) le long de la zone formant congé de raccordement (119), croisant sous le bord de fuite (116) de la pale profilée depuis le côté pression jusqu'au côté aspiration et étant croisé par un trou de refroidissement (130, 132) de bord de fuite suivant un angle de sensiblement 90°.
